# FASCICULE DE BREVET EUROPEEN

(11) **EP 0 596 782 B1**
(45) Date de publication et mention de la délivrance du brevet: **12.03.1997**
(21) Numéro de dépôt: 93402660.0
(22) Date de dépôt: 29.10.1993
(51) Int. Cl.: B60Q 1/26

(54) **Elément modulaire pour la réalisation de feux de signalisation de véhicules automobiles**
Modulare Einheit für Signalleuchte eines Fahrzeugs
Modular unit for vehicle signal light

(30) Priorité: 02.11.1992 FR 9213088
(43) Date de publication de la demande: 11.05.1994
(73) Titulaire: VALEO VISION, 93000 Bobigny (FR)
(72) Inventeur: Brassier, Marc, F-94300 Vincennes (FR); Gasquet, Jean-Claude, F-89100 Saint-Clément (FR); Segaud, Daniel, F-75012 Paris (FR); Mauroy, Bernard, F-77680 Roissy en Brie (FR)
(74) Mandataire: Martin, Jean-Jacques

(56) Documents cités:
- EP-A- 0 326 668
- EP-A- 0 328 088
- EP-A- 0 434 471
- WO-A-84/00799
- DE-A- 2 941 634
- US-A- 5 038 255
- PATENT ABSTRACTS OF JAPAN vol. 10, no. 307 (M-527)(2363) 18 Octobre 1986 & JP-A-61 119 444 (STANLEY ELECTRIC CO LTD)

## Description

La présente invention a trait d'une façon générale aux feux de signalisation de véhicules automobiles.

Un feu de signalisation comprend classiquement une lampe à filament monté sur une platine, constituant son fond, et un voyant. Des aménagements optiques sont fréquemment utilisés pour rabattre une proportion importante du rayonnement issu de la lampe dans une direction voisine d'un axe d'émission privilégié, ou encore pour donner à la plage éclairante du feu, en dépit de l'utilisation d'une source intense pratiquement ponctuelle, une intensité lumineuse homogène.

On connaît également un feu de signalisation qui est subdivisé en une pluralité d'éléments comportant chacun une lampe à filament de petites dimensions, par exemple une lampe de type sans culot ("Wedge base"), en coopération avec ses propres aménagements optiques, le but étant d'obtenir une plage éclairante à la fois homogène et de grande taille, et un feu d'épaisseur réduite. Un tel feu à plusieurs lampes est cependant coûteux à réaliser.

Plus généralement, les divers composants d'un feu, à l'exception de la ou des lampes qui sont standard, doivent faire l'objet d'une étude et d'un développement spécifiques, au cas par cas, en fonction d'un cahier des charges donné. Il en résulte un prix de revient élevé.

D'autres inconvénients des feux de signalisation classique résident en ce que les lampes à filament utilisées doivent être remplacées fréquemment, en ce qu'ils ont généralement une profondeur importante, du fait que le socle doit présenter au moins avec certaines lampes un profil parabolique de concentration de flux, et en ce qu'il est impossible de donner aux plages éclairantes des contours complexes. Sur ce dernier point, le concepteur est généralement tenu à des formes simples de type circulaire ou rectangulaire.

On connait par EP-A-0 328 088 un feu de signalisation comportant une pluralité d'éléments lumineux comportant des moyens pour être fixés de façon juxtaposée dans es positions déterminées sur un support constitué d'un circuit imprimé, et comportant des aménagements latéraux d'ancrage mutuel.

On connaît par ailleurs par le document EP-A-0 326 668 un module élémentaire ayant les particularités du préambule de la revendication 1 ci-après.

Cependant, ces modules élémentaires se limitant à une source et à une pièce fixée à cette source, il reste nécessaire de prévoir également, outre une plaque de fond et un voyant définissant la cavité intérieure du feu, deux plaques de circuits imprimés ainsi qu'un écran intermédiaire.

Un tel agencement connu n'est donc pas à même de résoudre les problèmes de la technique connue dans la mesure où de nombreux composants ont encore à faire l'objet d'une conception spécifique adaptée au cahier des charges du feu que l'on souhaite obtenir.

La présente invention vise à pallier les divers inconvénients de l'état de la technique et à proposer un élément modulaire élémentaire, apte à être juxtaposé avec une pluralité d'autres éléments modulaires pour réaliser facilement et économiquement des plages éclairantes de caractéristiques géométriques et photométriques tout à fait variables, avec les avantages d'une épaisseur de feu extrêmement limitée et d'une bonne fiabilité.

Elle concerne à cet effet un module élémentaire ayant les particularités de la revendication 1.

D'autres aspects, buts et avantages de la présente invention apparaîtront mieux à la lecture de la description détaillée suivante d'un mode de réalisation préféré de celle-ci, donnée à titre d'exemple et faite en référence aux dessins annexés, sur lesquels:
la figure 1 est une vue en coupe longitudinale médiane d'un module à diodes électroluminescentes selon une première forme de réalisation de l'invention,
la figure 2 est une vue de dessus partielle d'un ensemble de modules selon la figure 1,
la figure 3 est une vue en coupe transversale selon la ligne III-III du module de la figure 1,
la figure 3a est une vue en coupe transversale partielle analogue à la figure 3, illustrant une variante de réalisation,
la figure 4 est une vue en coupe transversale selon la ligne IV-IV du module de la figure 1,
la figure 5 est une vue de dessus schématique de quatre modules juxtaposés,
la figure 6 illustre sous forme schématique sept possibilités d'agencements de moyens d'assemblage entre modules voisins,
la figure 7 est une vue de dessous d'une deuxième forme de réalisation d'un module à diode électroluminescente selon l'invention,
la figure 8 est une vue en élévation de côté du module de la figure 7,
la figure 9 est une vue en coupe axiale médiane du module des figures 7 et 8,
la figure 10 est une vue en élévation de face du module des figures 7 à 9,
la figure 11 est une vue de dessus du module des figures 7 à 10,
la figure 12 est une vue en coupe transversale médiane d'un module à diodes électroluminescentes selon une troisième forme de réalisation de l'invention,
la figure 13 est une vue partielle en coupe longitudinale médiane du module de la figure 12,
la figure 14 est une vue partielle de dessus du module des figures 12 et 13,
la figure 15 illustre schématiquement des moyens de connexion électrique de modules à diodes électroluminescentes entre eux,
la figure 16a est une vue en coupe verticale axiale schématique d'un module à diodes électroluminescentes raccordées électriquement selon un premier mode de raccordement,
la figure 16b est une vue en coupe verticale axiale schématique d'un module à diodes électroluminescentes raccordées électriquement selon un deuxième mode de raccordement,
la figure 16c est une vue en coupe verticale axiale schématique d'un module à diodes électroluminescentes raccordées électriquement selon un troisième mode de raccordement,
la figure 17 est une vue de face schématique d'un ensemble de feux de signalisation arrière réalisé à l'aide de modules à diodes électroluminescentes selon la présente invention,
la figure 18 est une vue en coupe selon la ligne XVIII-XVIII de la figure 17,
la figure 19 est une vue en coupe selon la ligne XIX-XIX de la figure 17,
la figure 20 est une vue en coupe selon la ligne XX-XX de la figure 17,
la figure 21 est une vue en coupe selon la ligne XXI-XXI de la figure 17,
la figure 22 est une vue en coupe selon la ligne XXII-XXII de la figure 17,
la figure 23 est une vue d'ensemble schématique, en coupe transversale, d'un feu stop surélevé réalisé à l'aide de modules à diodes électroluminescentes selon la présente invention,
la figure 24 est une vue de détail en coupe transversale du feu de la figure 23, et
la figure 25 est une vue de face du feu des figures 23 et 24.

On notera préliminairement que, d'une figure à l'autre, des éléments ou parties identiques ou similaires sont désignés par les mêmes signes de référence, et ne seront pas décrits à nouveau afin d'alléger la description.

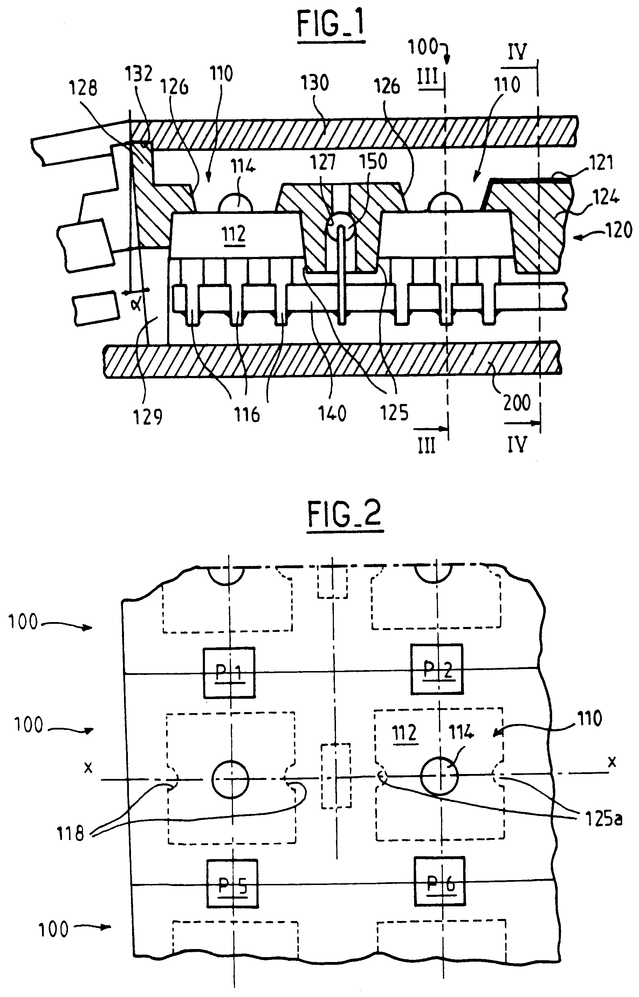

En référence tout d'abord aux figures 1 à 5, on a représenté un module à diodes électroluminescentes destiné à tenir lieu de composant élémentaire, apte à être juxtaposé à des modules identiques, pour la réalisation d'un feu de signalisation, ou d'un ensemble de feux de signalisation, de grande surface.

Dans le présent exemple, un tel module, globalement indiqué en 100, comprend quatre diodes électroluminescentes 110 de type "Brewster", disponibles dans le commerce.

Un avantage lié à l'utilisation de diodes Brewster par groupe de quatre réside en ce que chaque diode nécessite une tension électrique d'alimentation de l'ordre de 2,5 à 3 volts, si bien qu'en plaçant ces diodes en série, on peut y appliquer directement la tension de 12 volts disponible aux bornes de la batterie du véhicule.

Chaque diode électroluminescente ou DEL 110 comporte un corps 112 de contour généralement carré et de section transversale trapézoïdale, de façon classique en soi. Au centre de la surface extérieure ou surface avant du corps est présente une protubérance 114 de forme sensiblement hémisphérique. A l'arrière du corps 112 s'étendent trois pattes métalliques 116 de connexion électrique, dont la section dans une région terminale est réduite. Comme le montre la figure 2, le corps 112 de la DEL 110 comporte deux encoches latérales opposées 118 de section semi-circulaire, destinées à assurer le position de la DEL dans une position bien déterminée.

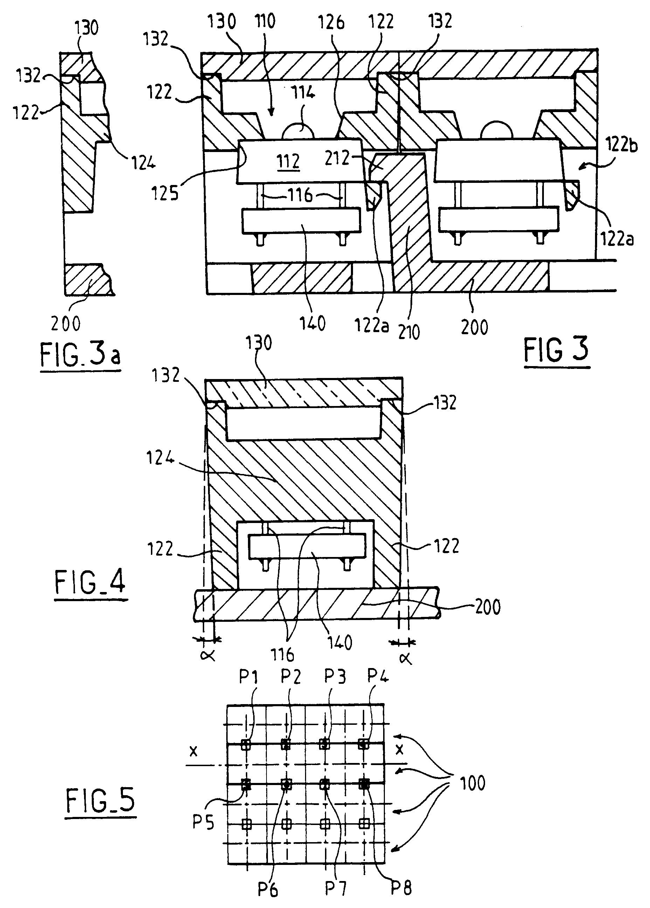

Un module selon cette première forme de réalisation comporte une ossature 120 allongée selon un axe longitudinal x-x (figure 2), dont la section droite présente généralement la forme d'un "H" (figure 4). Cette ossature présente deux montants latéraux 122 reliés entre eux, essentiellement à mi-hauteur, par une traverse 124. Cette ossature est réalisée préférentiellement par moulage de matière plastique.

Comme le montre la figure 1, dans la face inférieure de la traverse 124 sont pratiqués quatre logements 125 alignés selon l'axe x-x et dont la forme est essentiellement complémentaire de celle des corps 112 des quatre DEL 110. Ainsi chaque logement 125 présente deux nervures latérales 125a (figure 2) destinées à être engagées dans les encoches 118 du corps 112 de DEL. En outre, dans la face supérieure de ladite traverse sont formés, à l'aplomb des logements 125, quatre ouvertures traversantes 126 de section généralement circulaire, débouchant au centre desdits logements.

Les ouvertures 126 sont tronconiques, en étant évasées vers le haut comme illustré, de manière à laisser passer l'ensemble du flux lumineux légèrement divergent (l'angle solide est typiquement de 50°) issu de l'élément 110 associé.

Par ailleurs, l'ossature 120 comporte deux parois terminales opposées 128 (figure 1) s'étendant vers le haut.

A l'extrémité supérieure des branches latérales 122 de l'ossature est fixé un élément transparent formant couvercle 130, que l'on utilise avantageusement comme élément optique. Cet élément 130 est allongé suivant l'axe x-x, sur toute la longueur de l'ossature 120. Il comporte le long de ses quatre bords des rainures 132 ouvertes sur le côté et destinées à recevoir les extrémités libres des branches 122 et des parois terminales 128, pour assurer un bon positionnement mutuel de ces éléments.

Par exemple, l'élément 130 peut comporter, en relief sur sa surface interne ou externe, quatre lentilles de Fresnel alignées avec les ouvertures 126 de sortie de lumière formées dans l'ossature 120.

De préférence, les parties 110, 120 et 130 du module sont assemblées par collage, soudure aux ultrasons, ou toute autre technique appropriée, de manière à assurer une parfaite cohésion du module 100.

La partie inférieure des branches (en se référant aux figures 1, 3 et 4) et la traverse 124 définissent ensemble une cavité destinée à recevoir un circuit imprimé 140, de forme allongée, sur lequel les broches de connexion 116 des DELs sont soudées. On observe qu'à l'aplomb de chaque paroi terminale 128 de l'ossature est présente une ouverture 129 (figure 1) qui permet la connexion électrique, en parallèle, d'un circuit imprimé 140 avec un circuit imprimé voisin.

De façon classique, des diodes électroluminescentes placées en série nécessitent l'interposition, en série également, d'une résistance de limitation de courant. Une telle résistance est indiquée en 150. Elle est placée dans un logement complémentaire 127 formé dans la traverse 124 de l'ossature entre deux logements 125 adjacents, et ouvert au moins vers le bas. De la sorte, la résistance 150 peut être soudée directement sur le circuit imprimé 140 (figure 1).

Comme le montrent les figures 1 et 4, l'ossature 120 présente au niveau de ses bords longitudinaux et de ses bords terminaux un angle de dépouille α, par exemple de 5°. Cet angle de dépouille permet, comme on le verra en détail plus loin, de juxtaposer intimement plusieurs modules à DELs avec des décalages angulaires mutuels pouvant atteindre en l'espèce 10°, ce qui permet de réaliser des surfaces bombées.

Une pluralité de modules 100 selon l'invention sont destinés à être montés sur une platine de support 200, à l'aide de moyens dont on va décrire ci-dessous une forme de réalisation particulière.

On définit tout d'abord sur un module 100 huit positions, notées P1 à P8 sur la figure 5, situées respectivement de part et d'autre, en direction transversale, d'un élément DEL 110.

On prévoit ensuite qu'à chaque position, l'ossature 120 peut présenter l'une parmi trois configurations différentes, à savoir :
- une configuration pleine ou obturée, c'est-à-dire que la paroi latérale 122 de l'ossature dans cette position est sensiblement ininterrompue; cette configuration est notée "O" et illustrée sur la figure 3a;
- une configuration trouée ou ouverte, c'est-à-dire que la paroi latérale 122 de l'ossature dans cette position est interrompue sur une largeur prédéterminée, pour laisser un passage s'étendant entre une hauteur voisine du plan supérieur du corps 112 de LED et la base de l'ossature; cette configuration est notée "T", et illustrée sur la figure 3, où les deux modules 100 juxtaposés présentent chacun, dans une position située à gauche, un tel passage; et
- une configuration de clipsage : la paroi latérale 122 de l'ossature est interrompue essentiellement comme pour la configuration "T" précitée, mais une dent 122a définit entre elle et l'extrémité supérieure du passage une cavité 122b; cette configuration est notée "C", et est illustrée sur la figure 3, où les deux modules 100 juxtaposés présentent chacun, dans une position située à droite, une telle configuration.

La platine 200 comporte, en des emplacements bien déterminés, des pattes souples 210 qui s'étendent vers le haut et qui se terminent chacune par une dent 212 faisant saillie vers le côté. Une telle patte est illustrée sur la figure 3. La largeur de chaque patte est choisie égale ou légèrement inférieure à la largeur du passage défini par la paroi latérale 122 de l'ossature 120 dans les configurations "T" et "C".

Ainsi une ossature 120 peut présenter dans ses huit positions un motif de huit configurations d'assemblage choisie parmi un nombre très important (égal en théorie à 3⁸) de motifs possibles.

Et un motif particulier de configurations d'assemblage peut constituer, selon un autre aspect de la présente invention, un codage associé au type de module à diodes électroluminescentes considéré. Ainsi il est possible de distinguer des des modules selon la couleur dans laquelle ils émettent (notamment rouge ou ambre), selon la nature des éléments optiques (billes, stries, lentilles, échelons de Fresnel, etc...) formés sur l'élément de recouvrement transparent 130, etc... Un tel "codage" a pour fonction essentielle d'assurer un détrompage lors de la mise en place d'une pluralité de modules 100 sur la platine 200, en évitant notamment que des modules de natures différentes ne puissent être mélangés, en évitant également que des modules identiques ne puissent être orientés tête-bêche, et en évitant qu'un emplacement de la platine destiné à recevoir un certain type de module ne puisse recevoir accidentellement un module de type différent.

Plus précisément, on comprend aisément à partir des figures 3 et 3a que, lors de la juxtaposition côte-à-côte de deux modules 100, une configuration "C" nécessite d'être en face d'une configuration "T" afin de laisser la place nécessaire à la patte de clipsage 210 de la platine 200. Ainsi l'on observe, au milieu de la figure 3, que cette patte 210, dont la dent 212 est engagée dans la cavité 122b du module situé à gauche, doit emprunter un chemin passant par le passage défini par la configuration "T" du module situé à droite. On peut ainsi réaliser un détrompage entre modules placés côte-à-côte, pour s'assurer qu'ils sont de même type.

On comprend également qu'un module ne peut être positionné sur la platine si une patte de clipsage 210 se trouve au droit d'une configuration "O". On réalise ainsi un détrompage entre module et platine, pour s'assurer que la platine reçoit bien le type de module qui convient.

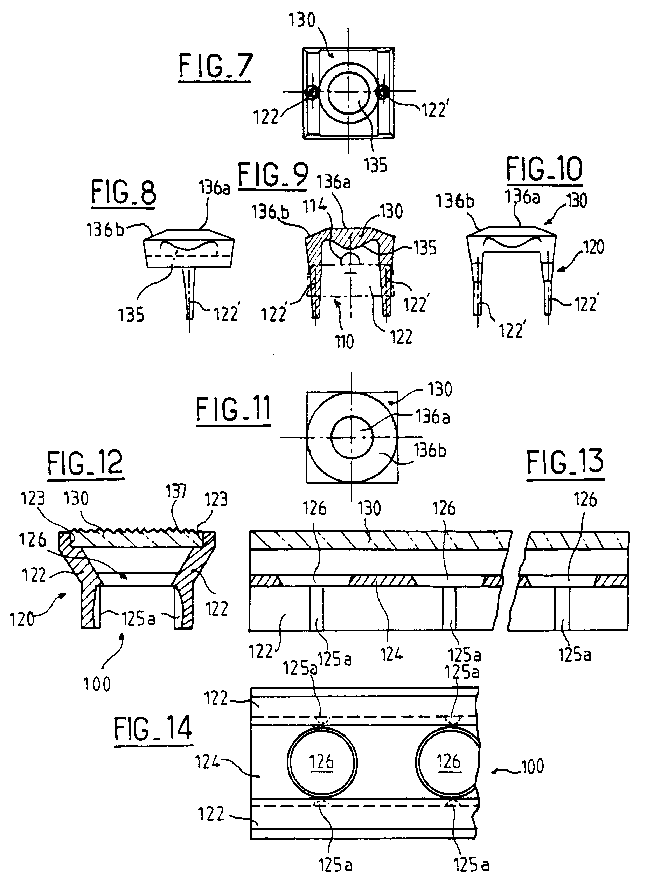

La figure 6 illustre, par les codes "C", "T" et "O" sus-mentionnés, sept motifs de configurations particulièrement appropriées. Chaque motif comprend trois configurations clipsées "C" en triangle, permettant l'ancrage sur la platine en trois points, c'est-à-dire par trois pattes de clipsage 210, chaque côté longitudinal comportant au moins l'une de ces configurations "C". On confère ainsi au montage une grande stabilité. On peut ainsi identifier sept types différents de modules.

Bien entendu, d'autres motifs peuvent être envisagés, les contraintes étant qu'au moins une configuration clipsée "C" soit présente de chaque côté longitudinal, et qu'une configuration trouée "T" soit présente dans la position située de l'autre côté de l'élément DEL 110 considéré.

De nouveau en référence à la figure 1, il est avantageux que la surface extérieure, tournée vers l'élément 130, de la traverse 124 soit revêtue d'un revêtement 121 de type aluminé (par application de peinture, métallisation sous vide, etc...), de manière à donner au module, lorsqu'il est éteint et observé de l'extérieur, un aspect aussi homogène que possible. On note en effet que, de façon conventionnelle, le corps 110 d'une diode "Brewster" présente un aspect incolore, transparent ou translucide.

Bien que l'on ait décrit ci-dessus un module comportant quatre diodes de type "Brewster", il est bien entendu possible de réaliser des modules comportant un nombre quelconque de telles diodes. On peut ainsi concevoir un ensemble de briques élémentaires, par exemple à 1, 2, 4, 8 et 12 diodes disposées selon une rangée unique, ou encore à 4, 6 ou 8 diodes disposées côte-à-côte en deux rangées, etc..., pour réaliser des plages éclairantes (éventuellement bombées) de formes et de dimensions tout à fait quelconques par un choix judicieux de briques élémentaires.

Les figures 7 à 11 illustrent un module à diode de type "Brewster" selon une autre forme de réalisation de l'invention. Ce module comprend une ossature 120 et un élément de recouvrement 130 formés d'un seul tenant, par moulage de matière plastique transparente. L'ossature 120 est dans ce cas limitée à deux pattes 122' qui font saillie vers le bas à partir des régions médianes de deux côtés opposés de l'élément 130, et qui s'engagent au moins partiellement dans les encoches latérales opposées 118 de l'élément DEL 110, identique à celui décrit plus haut.

Le montage de ce module à une seule diode "Brewster" (ou, en variante, à plusieurs diodes) peut se faire sur un circuit imprimé (non représenté), les broches de l'élément DEL 110 et les extrémités libres des pattes 122' pouvant être engagées dans des trous appropriés du circuit imprimé.

On observe en outre sur ces figures que l'élément 130 définit une lentille plan-convexe, sa face intérieure 135, tournée vers l'élément 110, étant convexe, tandis que la partie en vis-à-vis 136a de sa face extérieure est plane, en étant bordée par une partie biseautée tronconique 136b. On réalise ainsi une concentration, suivant l'axe de l'élément 110, du flux lumineux qu'il émet.

Les figures 12 à 14 représentent une autre forme de réalisation d'un module selon l'invention.

On y trouve, de façon analogue à la forme de réalisation des figures 1 à 6, une ossature allongée 120 dont la section droite présente la forme générale d'un "H", avec deux branches latérales 122 et une traverse 124 dans laquelle sont pratiquées une pluralité d'ouvertures alignées 126, par exemple au nombre de quatre.

Mais à la différence de la forme de réalisation des figures 1 à 6, chaque élément DEL 110 est reçu non pas dans un logement spécifique forme dans la traverse 124, mais dans la cavité définie par la base des branches latérales 122 et par la traverse 124. A cet effet, il est prévu dans la partie de base desdites branches 122, au droit de chaque ouverture respective 126 et de part et d'autre de celle-ci, une nervure semi-circulaire 125a apte à s'engager dans une encoche associée 118 de l'élément DEL 110.

Une autre particularité du module des figures 12 à 14 réside en ce que l'élément de recouvrement 130, ici pourvu sur sa surface extérieure d'échelons de Fresnel 137, est encastré entre les deux branches 122, des gorges 123 étant formées à cet effet dans la région terminale extérieure desdites branches.

On observe enfin que les branches 122 de l'ossature 120 sont essentiellement parallèles entre elles dans la région de leur base, mais s'évasent vers le haut au delà de la traverse 124. On peut ainsi, comme précédemment, réaliser des plages éclairantes bombées.

Ici encore, les composants 110, 120 et 130 du module sont assemblés par une technique classique de collage ou de soudure. Un avantage propre à ce mode de réalisation réside en ce qu'on peut réaliser un profilé de grande longueur, dans lequel des ossatures 120 de diverses longueurs peuvent être découpées, pour réaliser des modules à N éléments 110.

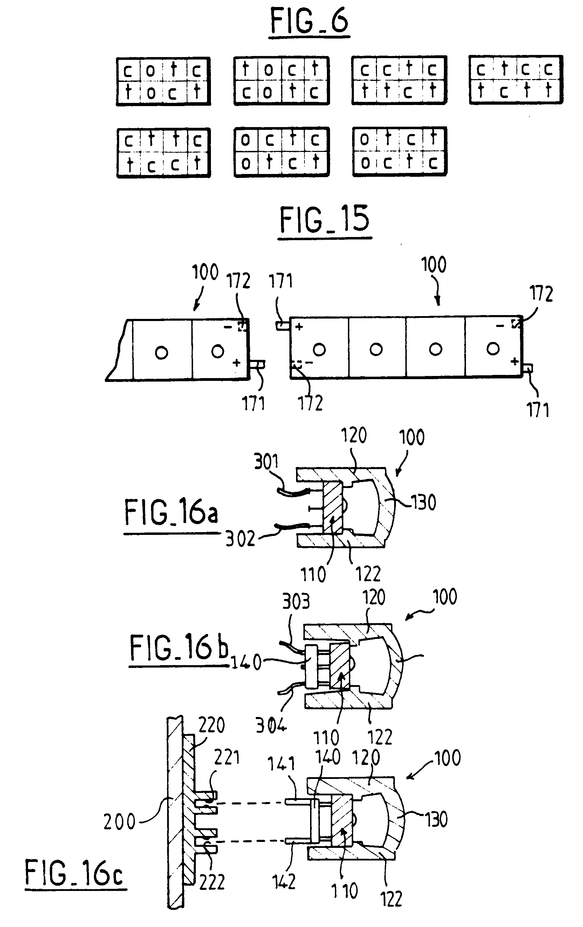

La figure 15 illustre schématiquement un mode de connexion électrique possible de deux modules 100 disposés dans l'alignement l'un de l'autre.

Chaque module 100 comporte, au niveau de chaque face d'extrémité longitudinale, une broche mâle 171 et une broche femelle 172 situées dans deux positions bien déterminées. A son extrémité opposée, il est prévu également deux broches mâle et femelle 171, 172 disposées de façon inversée. Ainsi, lors de la réalisation d'un alignement d'une pluralité de modules, une broche mâle 171 d'un module s'engage dans une broche femelle en vis-à-vis 172 du module voisin, tandis qu'une broche mâle 171 dudit module voisin s'engage dans la broche femelle 172 du module premier cité. L'on réalise ainsi un circuit d'alimentation électrique de type bus qui circule dans tous les modules connectés.

Les figures 16a à 16c illustrent schématiquement d'autres types de connexions électriques possibles.

Dans le cas dans le la figure 16a, chaque diode de type "Brewster" 110 est reliée individuellement à un circuit d'alimentation par deux conducteurs souples 301, 302, dont les extrémités peuvent présenter des cosses (non représentées) à sertir sur les broches de ladite diode.

Sur la figure 16b, on a illustré un circuit imprimé 140 reçu dans une cavité de l'ossature 120, d'une manière tout à fait analogue au cas des figures 1 à 6. Ce circuit imprimé, sur lequel sont connectés N éléments DELs 110, est relié individuellement par deux conducteurs 303, 304 à un circuit d'alimentation.

La figure 16c illustre une solution qui fait appel également à un circuit imprimé 140. Cependant, ce circuit imprimé comporte deux broches conductrices mâles 141, 142 qui font saillie, en des positions bien déterminées, vers son côté opposé aux éléments DELs 110. La platine 200 porte quant à elle des éléments de connexion femelles 221, 222 destinés à recevoir lesdites broches mâles 141, 142. Par exemple, ces éléments de connexion femelles peuvent faire partie d'un circuit dit "circuit découpé", bien connu en soi pour la distribution des tensions d'alimentation à des lampes à filament d'un bloc de feux de signalisation, ce circuit découpé étant globalement indiqué en 220.

Dans un tel mode de réalisation, il est à noter que ces moyens de connexion électrique mâle-femelle peuvent être utilisés avantageusement pour la fixation mécanique de chaque module 100 sur la platine 200.

Et là encore, la position de la paire de broches mâles 141, 142 peut varier en fonction du type de module considéré, de manière à assurer un détrompage dans le même esprit, mais par des moyens techniques différents, que dans le cas des modules réalisés selon les figures 1 à 6.

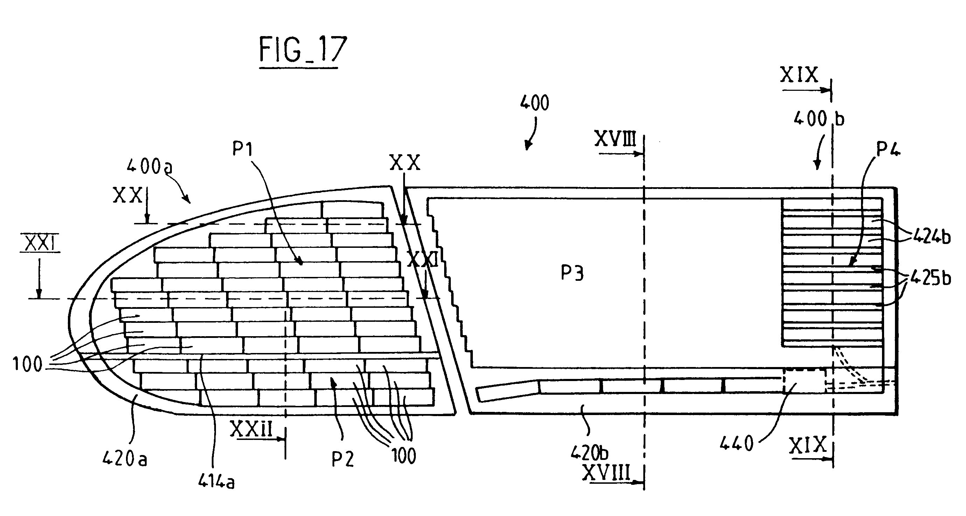

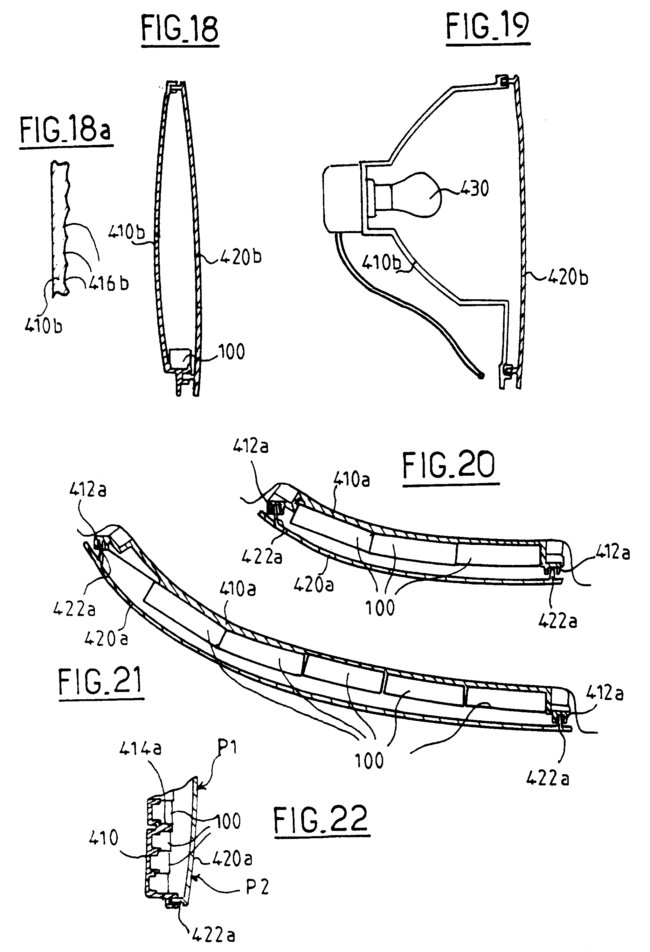

La figure 17 illustre schématiquement, en élévation de face, un bloc de feux de signalisation arrière de véhicule automobile utilisant des modules à diodes électroluminescentes tels qu'on les a décrits ci-dessus. Les figures 18 à 22 illustrent différentes coupes à travers ce bloc de feux.

En référence à ces figures, le bloc de feux 400 est séparé en deux parties distinctes, à savoir une partie extérieure bombée 400a, dite en retour d'aile, et une partie intérieure (par rapport à l'axe central du véhicule), de forme généralement plate.

La partie extérieure 400a comprend un fond 410a et un voyant ou globe 420a, de forme incurvée, situés à une distance essentiellement constante l'un de l'autre.

Le voyant 420a est monté sur le fond 410a à l'aide d'un rebord rentrant périphérique 422a, engagé dans une rainure complémentaire 412a formée à la périphérie du fond 410a. Un joint d'étanchéité (non référencé) est classiquement interposé entre ces deux pièces.

La partie extérieure 400a comporte deux plages éclairantes P1 et P2 réalisées exclusivement à l'aide de modules à diodes électroluminescentes 100 par exemple tels que décrits plus haut. Il s'agit en l'espèce de modules à quatre diodes 110. Le fond 410a de ladite partie 400a joue le rôle de la platine telle que 200 décrite en référence aux figures 1 à 6, en comportant par exemple des moyens de clipsage (non représentés) pour le montage des modules individuels. Par exemple, la plage P1 supérieure correspond à un feu stop, de couleur rouge, tandis que la plage inférieure P2, de hauteur moindre, correspond à un feu clignotant indicateur de direction, de couleur ambre.

On observe sur les figures 20 et 21 que les différents modules 100 sont décalés angulairement l'un par rapport à l'autre, ce que permettent les angles de dépouille, tels que décrits plus haut, de leurs surfaces terminales.

En section verticale (figure 22), les modules 100 sont décalés en position les uns par rapport aux autres de manière à épouser l'inclinaison du fond 410a et du voyant 420a.

Les deux plages P1 et P2 sont séparées par une zone mince 414a venue de matière, en saillie vers l'avant, lors du moulage du fond 410a.

Etant donné que la couleur des fonctions lumineuses considérées est donnée directement par les diodes électroluminescentes, le voyant 420a peut être réalisé en matière plastique transparente incolore, ou en une matière plastique teintée (par exemple fumée) de manière à ne pas sensiblement altérer les couleurs engendrées.

On observe que l'utilisation de modules à diodes électroluminescentes selon l'invention permet de réaliser des feux d'une profondeur extrêmement limitée, typiquement de 20 à 30 mm, tout en présentant des plages éclairantes dont les niveaux d'éclairement sont extrêmement homogènes.

La partie intérieure 400b du bloc de feux comporte, de façon analogue à la partie 400a, un fond 410b et un voyant 420b assemblés de la même manière. Cette partie 400b définit deux plages éclairantes P3 et P4.

La partie P3, destinée par exemple à remplir la fonction feu de position, est également réalisée à l'aide de modules à diodes électroluminescentes, mais d'une manière différente des plages P1 et P2. Plus précisément, il est prévu dans la région inférieure de la cavité correspondant à la plage P3 une rangée unique de plusieurs modules 100 orientés de manière à émettre la lumière vers le haut. La surface du fond 410b tournée vers le voyant 420b comporte un traitement particulier de façon à rabattre vers l'extérieur, tout en la diffusant, la lumière reçue des modules 100. Dans le mode de réalisation des figures 17 à 22, ce traitement consiste en un grenage. Mais selon une variante de réalisation, illustrée sur la figure 18a, ce traitement peut consister en une série de stries concaves 416b (ou encore de stries convexes) s'étendant horizontalement sur la surface du fond 410b. Au niveau de la plage P3, le voyant 420b peut être par exemple transparent incolore ou teinté (fumé). De façon préférée, un revêtement opaque, par exemple noir, est formé à la surface intérieure du voyant 420b au niveau de la rangée de modules 100, de manière à masquer lesdits modules lorsque le bloc de feux est observé de l'extérieur.

L'autre plage éclairante P4 de la partie 400b correspond par exemple à la fonction feu de recul ou à la fonction feu anti-brouillard arrière. Elle est réalisée ici de façon conventionnelle : le fond 410b définit au niveau de la plage P4 un réflecteur du genre parabolique, qui coopère avec une lampe 430 pour former un faisceau de signalisation concentré. Le voyant 420b, au niveau de la plage P4, peut présenter des zones 424b, 425b alternativement transparentes incolores et translucides de couleur fumée, de manière à présenter un aspect relativement homogène avec la partie du voyant correspondant à la plage P3 tout en n'atténuant pas excessivement le rayonnement lumineux.

La référence 440 indique schématiquement un circuit d'alimentation pour la rangée de modules 100 éclairant vers le haut dans la plage P3.

Bien entendu, on peut réaliser des feux ou blocs de feux à l'aide de modules à diodes électroluminescentes pour obtenir des contours et des formes tout à fait quelconques. En particulier, en utilisant des modules additionnels à une seule diode ou à deux diodes, on comprend qu'il est possible de suivre de près des contours courbes quelconques.

On peut également avoir recours à de "faux modules", c'est-à-dire des modules ayant la forme et l'apparence de modules tels qu'on les a décrits plus haut, mais dépourvus de diodes électroluminescentes. On peut ainsi réaliser des feux de signalisation présentant, lorsqu'ils sont éteints, un aspect extrêmement homogène sur une plage donnée, de grandes dimensions, mais dont la ou les plages éclairantes sont des sous-plages, plus petites, de ladite plage donnée.

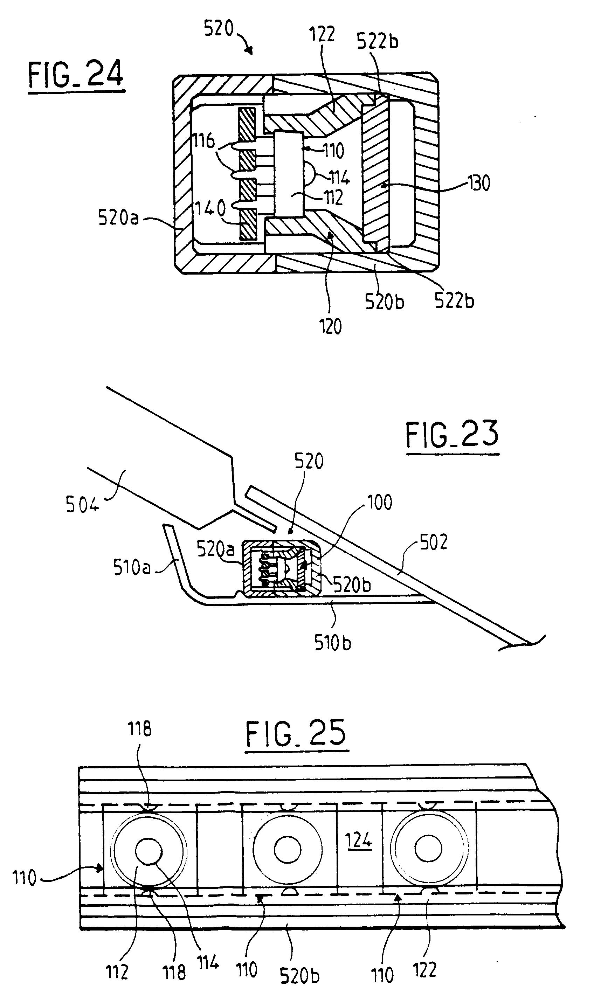

En référence aux figures 23 à 25, on va maintenant décrire un feu stop surélevé (feu de lunette arrière) réalisé selon l'invention avec des modules à diodes électro-luminescentes.

La figure 23 représente la lunette arrière inclinée 502 du véhicule, un élément de carrosserie qui la surmonte étant désigné par 504.

Le feu stop surélevé comprend un capot 510 de section transversale en forme générale de "L", dont une branche essentiellement verticale 510a est plaquée contre l'élément 504 et dont une branche horizontale 510b est plaquée contre la lunette 502.

Sur le dessus de cette branche horizontale 510b est monté un feu stop qui comprend une pluralité de modules tels que décrits en référence aux figures 12 à 14, disposés selon une rangée horizontale unique. On pourrait prévoir en variante un module unique de grande longueur. Les modules sont disposés dans un boîtier ou coquille 520 s'étendant horizontalement et comportant deux demi-coquilles 520a et 520b, la demi-coquille arrière (par rapport à la direction d'émission de la lumière) étant opaque et comportant des moyens (non représentés) pour sa fixation sur la branche 510b du capot. La demi-coquille avant 520b est réalisée en matière plastique transparente incolore (ou fumée), de manière à laisser passer la lumière émise par les éléments DELs 110 et traversant le ou les éléments de recouvrement 130.

Un circuit imprimé est reçu dans la demi-coquille 520a, les pattes de connexion 116 des éléments 110 étant soudés sur ce circuit. Cette demi-coquille 520a abrite également les conducteurs souples de liaison électrique (non représentés).

La demi-coquille 520b reçoit quant à elle les modules 100, et elle comporte à cet effet, dans l'épaisseur de ses parois supérieure et inférieure, des épaulements 522b permettant le calage du bord antérieur (par rapport à la direction d'émission) de chaque module.

Les divers composants du feu (modules 100 et coquille 520) sont assemblés de préférence par collage.

On peut ainsi réaliser selon l'invention un feu stop surélevé d'une hauteur de quelques dizaines de millimètres et d'une largeur de plusieurs dizaines de centimètres, ce qui s'avère intéressant à la fois sur le plan de la sécurité (la vision dans le rétroviseur d'habitacle n'est pratiquement pas affectée) et sur le plan du style. L'intensité lumineuse du feu est en outre extrêmement homogène sur toute sa largeur.

## Revendications

1. Module élémentaire destiné à un feu de signalisation de véhicule notamment automobile comportant une pluralité de diodes électroluminescentes (110) comportant chacune un corps (112), une pluralité de pièces individuelles (120) reliées auxdites diodes électroluminescentes, et des moyens (130) de recouvrement des diodes électroluminescentes, chaque pièce individuelle comportant une ouverture (126) pour le passage de la lumière émise par celle-ci et des moyens (125; 122'; 122, 125a) pour le positionnement d'une diode électroluminescente en regard de chaque ouverture, ainsi que des moyens (122, 132; 122, 123) pour le positionnement des moyens de recouvrement en regard des ouvertures, module caractérisé en ce qu'il comprend :
- une ossature (120) constituée par l'une desdites pièces individuelles,
- au moins un élément de recouvrement associé (130) monté sur ladite ossature (120) et destiné à constituer une partie desdits moyens de recouvrement, et
- des moyens (122a) prévus sur ladite ossature pour la fixation du module sur un élément de support (200).

2. Module selon la revendication 1, caractérisé en ce qu'il comprend quatre diodes électroluminescentes alignées (110), connectées électriquement en série.

3. Module selon l'une des revendications 1 et 2, caractérisé en ce que ledit élément de recouvrement (130) comprend des aménagements optiques (137) de déviation de la lumière.

4. Module selon l'une des revendications 1 à 3, caractérisé en ce que les moyens de fixation du module sur un élément de support comprennent des moyens de clipsage (122a).

5. Module selon l'une des revendications 1 à 4, caractérisé en ce qu'il comprend une pluralité de diodes électroluminescentes (110) comportant chacune des broches de connexion (116), et un circuit imprimé (140) sur lequel lesdites broches sont soudées.

6. Module selon l'une des revendications 1 à 5, caractérisé en ce que l'ossature (120) présente une section transversale en forme générale de "H" comportant deux montants latéraux (122) et une traverse (124), en ce que la ou lesdites ouvertures (126) sont pratiquées dans la traverse (124), en ce que le ou les éléments de recouvrement (130) sont montés sur des premières extrémités libres des montants (122) et en ce que les moyens de fixation du module sur un élément de support (200) opèrent entre lesdits montants (122), dans une région opposée à l'élément de recouvrement au moins prévu, et l'élément de support.

7. Module selon la revendication 6, caractérisé en ce que les moyens de positionnement d'une diode électroluminescente comprennent un logement (125) formé dans ladite traverse (124) au droit de l'ouverture associée (126), et dont la forme est essentiellement complémentaire de celle du corps (112) de la diode.

8. Module selon la revendication 6, caractérisé en ce que les moyens de positionnement d'une diode électroluminescente comprennent les deux montants (122), dans une région située en arrière de ladite traverse (124) par rapport à la direction d'émission.

9. Module selon la revendication 8, comportant au moins une diode électroluminescente (110) dont le corps (112) présente deux encoches de positionnement (118) opposées, caractérisé en ce que lesdits montants (122) comportent, sur leurs faces intérieures en vis-à-vis, des nervures (125a) essentiellement complémentaires desdites encoches.

10. Module selon l'une des revendications 1 à 9, caractérisé en ce que l'ouverture (126) associée à chaque diode électroluminescente présente une paroi généralement tronconique évasée dans la direction d'émission de la lumière.

11. Module selon l'une des revendications 1 à 10, comprenant au moins une rangée d'une pluralité de diodes électroluminescentes (110), caractérisé en ce que l'ossature (120) présente dans des parois latérales, de part et d'autre de chacune des diodes, une pluralité de configurations d'assemblage (T, O, C) choisies dans le groupe comprenant une configuration ouverte (T), une configuration fermée (O) et une configuration (C) pour dent d'encliquetage.

12. Module selon la revendication 11, caractérisé en ce qu'elle présente un motif de configurations d'assemblage associé bi-univoquement à au moins une caractéristique du module choisie dans le groupe comprenant les caractéristiques de couleur de lumière et les caractéristiques de traitement optique réalisé par l'élément de recouvrement au moins prévu.

13. Module selon la revendication 11 ou 12, caractérisé en ce que les moyens de fixation du module sur un élément de support (200) comprennent au moins deux pattes souples (210) solidaires dudit élément de support et comportant chacune une dent (212) apte à s'engager dans une cavité (122b) définie par une configuration d'encliquetage (C).

14. Module selon la revendication 13, caractérisé en ce que chaque patte (210) pourvue d'une dent (212) est apte à coopérer avec une configuration d'encliquetage associée (C) en s'étendant au moins partiellement dans un passage appartenant à une configuration ouverte (T) prévue dans une région en vis-à-vis d'un autre module placé côte-à-côte avec ledit module.

15. Module selon l'une des revendications 1 à 14, caractérisé en ce que ladite ossature (120) comporte des faces terminales et/ou latérales présentant un angle de dépouille (α), de manière à pouvoir juxtaposer une pluralité de modules (100) avec un défaut d'alignement.

16. Module selon l'une des revendications 1 à 15, caractérisé en ce que son ossature (120) présente un logement (127) pour une résistance de limitation de courant (150).

17. Module selon l'une des revendications 1 à 16, caractérisé en ce qu'il comporte des faces terminales opposées présentant au moins une ouverture (129) pour le passage de moyens de connexion électrique.

18. Module selon la revendication 3, caractérisé en ce que lesdits aménagements optiques sont choisis dans le groupe comprenant les lentilles, les échelons de Fresnel, les prismes et les stries.

19. Module selon la revendication 5, caractérisé en ce que le circuit imprimé (140) porte des broches de connexion (141; 142) aptes à coopérer avec des broches complémentaires (221, 222) formées sur l'élément de support (200), de manière à assurer au moins la connexion électrique du module.

20. Module selon la revendication 1, comprenant une diode électroluminescente unique (110) dont le corps (112) présente deux encoches de positionnement opposées (118), caractérisé en ce que ladite ossature (120) comprend deux pattes (122') s'étendant à partir dudit élément de recouvrement (130) et engagées au moins partiellement dans lesdites encoches.

21. Module selon l'une des revendications 1 à 20, caractérisé en ce que ledit élément de recouvrement (130) au moins prévu est réalisé d'un seul tenant avec l'ossature (120).

22. Module selon l'une des revendications 1 à 21, caractérisé en ce que l'ossature comporte, au voisinage de la ou des ouvertures (126), un revêtement de teinte neutre présentant un aspect voisin de celui d'une diode électroluminescente éteinte.

## Claims

1. Elementary module for an indicator light of a vehicle, in particular a motor vehicle, having a plurality of light-emitting diodes (110) each having a body (112), a plurality of individual parts (120) connected to the said light-emitting diodes, and means (130) of covering the light-emitting diodes, each individual part having an opening (126) for the passage of the light emitted by it and means (125; 122'; 122, 125a) for the positioning of a light-emitting diode opposite each opening, together with means (122, 132; 122, 123) for the positioning of the covering means opposite the openings, a module characterised in that it comprises:
- a framework (120) formed by one of the said individual parts,
- at least one associated covering element (130) mounted on the said framework (120) and designed to form a part of the said covering means, and
- means (122a) provided on the said framework for fixing the module on a support element (200).

2. Module according to Claim 1, characterised in that it comprises four aligned light-emitting diodes (110), connected electrically in series.

3. Module according to one of Claims 1 and 2, characterised in that the said covering element (130) comprises optical arrangements (137) for diverting the light.

4. Module according to one of Claims 1 to 3, characterised in that the means of fixing the module on a support element comprise snapping-on means (122a).

5. Module according to one of Claims 1 to 4, characterised in that it comprises a plurality of light-emitting diodes (110) each having connection pins (116), and a printed circuit (140) to which the said pins are soldered.

6. Module according to one of Claims 1 to 5, characterised in that the framework (120) has a transverse section in the overall shape of an "H" with two lateral uprights (122) and a cross piece (124), in that the said opening or openings (126) are formed in the cross piece (124), in that the covering element or elements (130) are mounted on first free ends of the uprights (122) and in that the means of fixing the module on a support element (200) operate between the said uprights (122), in an area opposite the one covering element at least provided, and the support element.

7. Module according to Claim 6, characterised in that the means of positioning a light-emitting diode comprise a housing (125) formed in the said cross piece (124) in line with the associated opening (126), and whose shape is essentially complementary with that of the body (112) of the diode.

8. Module according to Claim 6, characterised in that the means of positioning a light-emitting diode comprise the two uprights (122), in an area situated to the rear of the said cross piece (124) with respect to the direct of emission.

9. Module according to Claim 8, having at least one light-emitting diode (110) whose body (112) has two opposite positioning recesses (118), characterised in that the said uprights (122) have, on their internal faces opposite each other, ribs (125a) essentially complementary with the said recesses.

10. Module according to one of Claims 1 to 9, characterised in that the opening (126) associated with each light-emitting diode has a generally tapered wall splayed in the direction of emission of the light.

11. Module according to one of Claims 1 to 10, comprising at least one row of a plurality of light-emitting diodes (110), characterised in that the framework (120) has in lateral walls, on each side of each of the diodes, a plurality of assembly configurations (T, O, C) chosen from the group comprising an open configuration (T), a closed configuration (O) and a configuration (C) for a snapping-in tooth.

12. Module according to Claim 11, characterised in that it has a pattern of assembly configurations associated biuniquely with at least one characteristic of the module chosen from the group comprising the characteristics of colour of light and the optical treatment characteristics produced by the one covering element at least provided.

13. Module according to Claim 11 or 12, characterised in that the means of fixing the module on a support element (200) comprise at least two flexible lugs (210) fixed to the said support element and each having a tooth (212) suitable for engaging in a cavity (122b) defined by a snapping-in configuration (C).

14. Module according to Claim 13, characterised in that each lug (210) provided with a tooth (212) is suitable for cooperating with an associated snapping-in configuration (C) while extending at least partially in a passage forming part of an open configuration (T) provided in a facing region of another module placed side-by-side with the said module.

15. Module according to one of Claims 1 to 14, characterised in that the said framework (120) has end and/or side faces having a taper angle (α), so that a plurality of modules (100) can be placed side by side and offset.

16. Module according to one of Claims 1 to 15, characterised in that its framework (120) has a housing (127) for a current- limiting resistor (150).

17. Module according to one of Claims 1 to 16, characterised in that it has opposite end faces with at least one opening (129) for the passage of the electrical connection means.

18. Module according to Claim 3, characterised in that the said optical arrangements are chosen from the group comprising lenses, Fresnel steps, prisms and ribs.

19. Module according to Claim 5, characterised in that the printed circuit (140) carries connection pins (141; 142) suitable for cooperating with complementary pins (221, 222) formed on the support element (200), so as to effect at least the electrical connection of the module.

20. Module according to Claim 1, comprising a single light-emitting diode (110) whose body (112) has two opposite positioning recesses (118), characterised in that the said framework (120) comprises two lugs (122') extending from the said covering element (130) and engaged at least partially in the said recesses.

21. Module according to one of Claims 1 to 20, characterised in that the one said covering element (130) at least provided is produced in a single piece with the framework (120).

22. Module according to one of Claims 1 to 21, characterised in that the framework has, in the vicinity of the opening or openings (126), a cladding of neutral colour whose appearance is similar to that of a switched off light-emitting diode.

## Patentansprüche

1. Elementarmodul für eine Signalleuchte eines Fahrzeugs, insbesondere eines Kraftfahrzeugs, bestehend aus einer Mehrzahl von Leuchtdioden (110) mit jeweils einem Körper (112), einer Mehrzahl von Einzelteilen (120), die mit den besagten Leuchtdioden verbunden sind, und Mitteln (130) zur Abdeckung der Leuchtdioden, wobei jedes Einzelteil eine Öffnung (126) für den Durchtritt des durch diese abgestrahlten Lichts enthält, und Mittel (125; 122'; 122, 125a) zur Positionierung einer Leuchtdiode gegenüber jeder Öffnung, sowie Mittel (122, 132; 122, 123) zur Positionierung der Abdeckmittel gegenüber den Öffnungen , **dadurch gekennzeichnet,** daß es die folgenden Teile umfaßt:
- ein Gestell (120), das durch eines der besagten Einzelteile gebildet wird,
- mindestens ein zugehöriges Abdeckelement (130), das auf dem besagten Gestell (120) angebracht ist und zur Bildung eines Teils der besagten Abdeckmittel dient, und
- auf dem besagten Gestell vorgesehene Mittel (122a) zur Befestigung des Moduls auf einem Halterungselement (200).

2. Modul nach Anspruch 1, **dadurch gekennzeichnet,** daß es vier aneinandergereihte Leuchtdioden (110) enthält, die elektrisch in Reihe geschaltet sind.

3. Modul nach einem der Ansprüche 1 und 2 , **dadurch gekennzeichnet,** daß das besagte Abdeckelement (130) optische Anordnungen (137) zur Ablenkung des Lichts enthält.

4. Modul nach einem der Ansprüche 1 bis 3 , **dadurch gekennzeichnet,** daß die Mittel zur Befestigung des Moduls auf dem Halterungselement Aufklemmittel (122a) enthalten.

5. Modul nach einem der Ansprüche 1 bis 4 , **dadurch gekennzeichnet,** daß es eine Mehrzahl von Leuchtdioden (110), die jeweils Anschlußsteckelemente (116) umfassen, und eine gedruckte Schaltung (140) enthält, auf der die besagten Steckelemente aufgelötet sind.

6. Modul nach einem der Ansprüche 1 bis 5 , **dadurch gekennzeichnet,** daß das Gestell (120) einen allgemein "H"-förmigen Querschnitt mit zwei Seitenschenkeln (122) und einer Querstrebe (124) aufweist, daß die besagte Öffnung bzw. die besagten Öffnungen (126) in die Querstrebe (124) eingearbeitet sind, daß das oder die Abdeckelemente (130) an ersten freien Enden der Seitenschenkel (122) angebracht sind und daß die Mittel zur Befestigung des Moduls auf dem Halterungselement (200) zwischen den besagten Seitenschenkeln (122) in einem dem mindestens vorgesehenen Abdeckelement gegenüberliegenden Bereich und dem Halterungselement wirksam sind.

7. Modul nach Anspruch 6, **dadurch gekennzeichnet,** daß die Mittel zur Positionierung einer Leuchtdiode eine Aufnahme (125) enthalten, die in der besagten Querstrebe (124) in Höhe der zugehörigen Öffnung (126) ausgebildet ist und deren Form in etwa der Form des Körpers (112) der Diode entspricht.

8. Modul nach Anspruch 6, **dadurch gekennzeichnet,** daß die Mittel zur Positionierung einer Leuchtdiode die beiden Seitenschenkel (122) in einem Bereich hinter der besagten Querstrebe (124), bezogen auf die Abstrahlrichtung, enthalten.

9. Modul nach Anspruch 8, mit mindestens einer Leuchtdiode (110), deren Körper (112) zwei gegenüberliegende Positionierausklinkungen (118) aufweist, **dadurch gekennzeichnet,** daß die besagten Seitenschenkel (122) auf ihren gegenüberliegenden Innenflächen Rippen (125a) umfassen, die in etwa formschlüssig mit den besagten Ausklinkungen ausgeführt sind.

10. Modul nach einem der Ansprüche 1 bis 9 , **dadurch gekennzeichnet,** daß die jeder Leuchtdiode zugeordnete Öffnung (126) eine allgemein kegelstumpfförmige Wand aufweist, die sich in der Abstrahlrichtung des Lichts konisch erweitert.

11. Modul nach einem der Ansprüche 1 bis 10, mit mindestens einer Reihe mit einer Mehrzahl von Leuchtdioden (110) , **dadurch gekennzeichnet,** daß das Gestell (120) in Seitenwänden, beiderseits jeder der Dioden, eine Mehrzahl von Verbindungskonfigurationen (T, O, C) aufweist, die aus einer Gruppe ausgewählt werden, zu der eine offene Konfiguration (T), eine geschlossene Konfiguration (O) und eine Konfiguration (C) für einen Rastzahn gehören.

12. Modul nach Anspruch 11 , **dadurch gekennzeichnet,** daß es ein Muster von Verbindungskonfigurationen aufweist, das eineindeutig mindestens einem Merkmal des Moduls zugeordnet ist, das aus einer Gruppe ausgewählt wird, zu der die Lichtfarbenmerkmale und die Merkmale der optischen Behandlung gehören, die durch das mindestens vorgesehene Abdeckelement (130) erfolgt.

13. Modul nach Anspruch 11 oder 12 , **dadurch** **gekennzeichnet,** daß die Mittel zur Befestigung des Moduls auf einem Halterungselement (200) mindestens zwei biegsame Ansätze (210) enthalten, die fest mit dem besagten Halterungselement verbunden sind und jeweils einen Zahn (212) umfassen, der in einen Hohlraum (122b) eingreifen kann, der durch eine Rastkonfiguration (C) gebildet wird.

14. Modul nach Anspruch 13 , **dadurch gekennzeichnet,** daß jeder mit einem Zahn (212) versehene Ansatz (210) mit einer zugehörigen Rastkonfiguration (C) zusammenwirken kann, wobei er sich zumindest teilweise in einen Durchgang erstreckt, der zu einer offenen Konfiguration (T) gehört, die in einem gegenüberliegenden Bereich eines anderen Moduls vorgesehen ist, das mit dem besagten Modul nebeneinander angeordnet ist.

15. Modul nach einem der Ansprüche 1 bis 14 , **dadurch gekennzeichnet,** daß das besagte Gestell (120) Abschluß- und/oder Seitenflächen umfaßt, die einen Freiwinkel (α) aufweisen, so daß eine Mehrzahl von Modulen (100) mit einem Ausrichtungsversatz nebeneinander angeordnet werden kann.

16. Modul nach einem der Ansprüche 1 bis 15 , **dadurch gekennzeichnet,** daß sein Gestell (120) eine Aufnahme (127) für einen Strombegrenzungswiderstand (150) aufweist.

17. Modul nach einem der Ansprüche 1 bis 16 , **dadurch gekennzeichnet,** daß es gegenüberliegende Abschlußflächen umfaßt, die mindestens eine Öffnung (129) für den Durchgang von elektrischen Anschlußmitteln aufweisen.

18. Modul nach Anspruch 3 , **dadurch gekennzeichnet,** daß die besagten optischen Anordnungen aus einer Gruppe ausgewählt werden, zu der Linsen, Fresnel-Gitter, Prismen und Rillen gehören.

19. Modul nach Anspruch 5 , **dadurch gekennzeichnet,** daß die gedruckte Schaltung (140) Anschlußsteckelemente (141; 142) trägt, die mit formschlüssigen Steckelementen (221, 222) zusammenwirken können, die auf dem Halterungselement (200) ausgebildet sind, so daR zumindest der elektrische Anschluß des Moduls sichergestellt ist.

20. Modul nach Anspruch 1, mit einer einzigen Leuchtdiode (110), deren Körper (112) zwei gegenüberliegende Positionierausklinkungen (118) aufweist, **dadurch gekennzeichnet,** daß das besagte Gestell (120) zwei Ansätze (122') umfaßt, die sich von dem besagten Abdeckelement (130) aus erstrecken und wenigstens teilweise in die besagten Ausklinkungen eingreifen.

21. Modul nach einem der Ansprüche 1 bis 20 , **dadurch gekennzeichnet,** daß das besagte mindestens vorgesehene Abdeckelement (130) einstückig mit dem Gestell (120) ausgeführt ist.

22. Modul nach einem der Ansprüche 1 bis 21 , **dadurch gekennzeichnet,** daß das Gestell in der Nähe der Öffnung bzw. der Öffnungen (126) eine Beschichtung mit neutralem Farbton umfaßt, die ein ähnliches Aussehen wie eine ausgeschaltete Leuchtdiode aufweist.
